# FASCICULE DE BREVET EUROPEEN

(11) **EP 2 140 320 B1**
(45) Date de publication et mention de la délivrance du brevet: **07.05.2014**
(21) Numéro de dépôt: 08775722.5
(22) Date de dépôt: 19.03.2008
(51) Int. Cl.: G05B 19/4099

(54) **PROCÉDÉ DE CONCEPTION D'UN EMBALLAGE PAR STRATOCONCEPTION INTÉGRÉ AU PROCÉDÉ DE CONCEPTION DU PRODUIT À EMBALLER**
PACKUNGSENTWURFSVERFAHREN MIT STRATODESIGN, DAS IN DEM VERFAHREN ZUM ENTWURF DES ZU VERPACKENDEN PRODUKTS ENTHALTEN IST
PACKAGE DESIGN METHOD USING STRATODESIGN INTEGRATED IN THE METHOD FOR DESIGNING THE PRODUCT TO BE PACKAGED

(30) Priorité: 23.03.2007 FR 0702106
(43) Date de publication de la demande: 06.01.2010
(73) Titulaire: Cirtes SRC, 88100 Saint Die Des Vosges (FR)
(72) Inventeur: BARLIER, Claude, F-88100 Coinches (FR); DEBBOUB, Rizad, F-25270 GEVRESIN (FR)
(74) Mandataire: Poupon, Michel
(86) Numéro de dépôt international: PCT/FR2008/050468
(87) Numéro de publication internationale: WO 2008/132370

(56) Documents cités:
- EP-A1- 0 585 502
- FR-A1- 2 717 734
- US-B2- 7 031 788

## Description

La présente invention concerne un nouveau procédé de conception d'emballage et un emballage obtenu par le procédé.

Un objectif principal de l'invention et de proposer un procédé de conception d'un emballage par intégration totale du procédé dans la chaîne numérique de conception du produit afin de répondre efficacement aux contraintes de coûts et de délais en supprimant la réalisation d'outillage coûteux.

L'emballage selon l'invention est conçu en même temps que le produit (à partir du fichier CAO initial) ou après numérisation du produit physiquement réalisé (rétro-conception).

Ce procédé utilise la définition numérique de la pièce (obtenu par numérisation ou pour CAO directe) pour réaliser numériquement à l'aide d'un logiciel automatique, la conception stratifiée de l'emballage. Cet emballage est ensuite produit par stratoconception dans des plaques de matériau choisi et avec un moyen de découpe adapté.

Ce procédé s'applique en particulier aux emballages pour produits à forte valeur ajoutée comme par exemple dans les secteurs automobile, aéronautique, médical, art, cristallerie, etc...

L'objectif de l'invention est atteint par un procédé de conception et de réalisation d'un emballage destiné à la protection et/ou au transport d'un produit, caractérisé en ce que toutes les étapes de conception numérique de l'emballage sont intégrées au procédé de numérisation du produit, et caractérisé en ce qu'il comporte une étape de stratification d'une contre forme virtuelle du produit à partir de se définition numérique et, servant à définir des données géométriques de chaque couche de l'emballage à découper. Ensuite on procède à la découpe puis à l'empilage des couches de l'emballage définies par les étapes de conception dudit emballage pour constituer un emballage réel.

Le procédé de stratification numérique utilisé dans l'invention est connu sous la dénomination de « stratoconception ».

L'invention concerne également un emballage pour la protection et/ou le transport d'un produit caractérisé en ce qu'il est obtenu par empilage de couches de matériau dont les formes et les dimensions ont été définies selon un procédé ci-dessus.

L'invention a pour avantage de proposer un emballage à partir de la surface numérique d'un produit donné et non à partir de la projection de son contour 2D ou du contour 2D d'un outil comme c'est le cas dans le document D1-US 7,031,788. La contre forme obtenue avec l'invention donne un emballage parfaitement enveloppant qui offre donc une meilleure sécurité pour le transport. Le document D1 propose en outre un usinage 2D dans la masse et non comme dans l'invention un usinage en 3D de formes complexes pouvant être creuses pour envelopper, après leur empilement, la forme 3D des produits.

L'art antérieur connaît également un document D2-FR 2 717 734 qui est relatif à une technique d'usinage agissant par élimination d'un volume extérieur d'un objet. D2 prévoit d'appliquer cette technique à la fabrication d'emballages, mais rien dans ce document ne permet à l'homme de l'art d'envisager la réalisation directe et automatique de l'emballage à partir de la seule définition numérique du produit à emballer comme c'est le cas dans la présente invention.

On comprendra mieux l'invention à la lumière de la description ci-après, faite en références aux figures annexées suivantes :
- figure 1 : modèle numérique virtuel d'un premier exemple de produit à emballer.
- figure 2 : génération automatique d'une contre forme pour le produit de la figure 1.
- figure 3 : pièces constituant l'emballage du produit de la figure 1.
- figure 4 : produit en cours de conditionnement dans son emballage.
- figures 5 et 6 : emballage en vue de dessus et de dessous pour le produit de la figure 1.
- figure 7 : deuxième exemple de produit à emballer.
- figure 8 : génération d'une contre forme pour le produit de la figure 7.
- figure 9 : stratification virtuelle numérique de la contre forme de la figure 8 et définition des strates.
- figure 10 : empilage des couches de cartons découpées sur le modèle des strates définies précédemment.
- figure 11 : présentation d'un volume de conditionnement approprié.
- figure 12 : emballage du produit dans la contre forme et dans le conditionnement approprié de la figure 11.
- figure 13 : emballage conventionnel.

Lors du procédé consistant à concevoir un prototype (1), ou un modèle virtuel du produit à emballer, on prévoit d'intégrer au dit procédé une ou plusieurs étapes de conception automatique d'une contre forme (2) virtuelle définie numériquement , et de découper virtuellement ladite contre forme en strates (3) selon un procédé de stratification informatique. Le procédé informatique selon l'invention produit toutes les données géométriques de chaque couche de matériau en plaque à découper en lien avec la strate virtuelle lui servant de modèle : épaisseur, contour, emplacement de perçage ou autres découpes etc... , et si nécessaire emplacements (4) d'accessoires et/ou produits de conservation, et/ou éléments de détection, et/ou identification à emballer avec le produit.

Le matériau choisi pour la plaque est par exemple du carton ou autre matériau recyclable par exemple les matériaux à base de fibres naturelles. On peut bien entendu utiliser un matériau non recyclable en plaque comme du polystyrène en plaques.

On peut alors procéder parallèlement et sur instructions du procédé de conception d'une part à la fabrication du produit et d'autre part à la découpe des couches de cartons (5) qui viennent d'être définies.

L'emballage final (6) est reconstitué par empilage des couches (5ᵢ) générées automatiquement par le procédé, et le produit peut être conditionné dans l'emballage final (6), lui-même pouvant être placé à l'intérieur d'un conditionnement (7) qui a lui aussi été déterminé lors de la conception du produit et de la contre forme, ou identifié de manière optimale parmi plusieurs modèles existants.

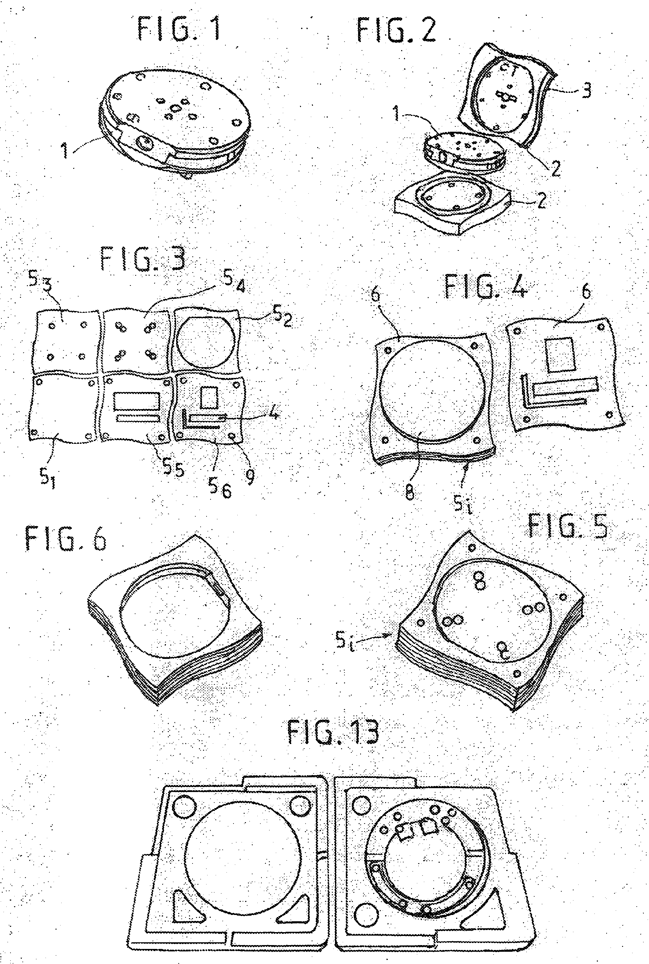

Les figures 1 à 6 représentent à titre de premier exemple, les étapes essentielles du procédé selon l'invention appliqué à l'emballage d'un produit type par exemple un boîtier mécanique (8).

La figure 3 représente six formes différentes de couches de cartons découpées qui après empilage et encliquetage mutuel, par exemple par des poinçonnages (9) formera l'emballage final (6). Les couches peuvent également être positionnées les unes par rapport aux autres par les trous (9) dans lesquels il est possible d'introduire des inserts de positionnement et de fixation ; dans ce cas on peut dire que les couches sont autoporteuses. Les couches peuvent également être maintenues par le conditionnement extérieur qui sert alors au positionnement et au maintien de l'empilement des couches de matériau.

Certaines couches (5₁) peuvent être pleines, d'autre (5₂) comporter une découpe principale destinée à accueillir le boîtier (8), d'autres (5₃, 5₄) comporter des perçages pour le positionnement d'axes, d'autres (5₅, 5₆) des emplacements (4) pour le logement d'accessoires par exemple, et enfin d'autres peuvent être composées de zones séparées.

En même temps que la conception des couches, le procédé fournit automatiquement une numérotation des couches et un plan de montage, sur papier ou sur écran, indiquant l'ordre relatif selon lequel doit s'effectuer l'empilement des couches et le positionnement du produit.

Comme le montre les figures, les contours extérieurs des couches de matériau ne sont pas nécessairement rectilignes ou polygonaux.

Cet emballage remplace avantageusement un conditionnement de l'art antérieur (voir figure 13) réalisé en polystyrène injecté, nécessitant un outillage coûteux et un recyclage difficile de l'emballage.

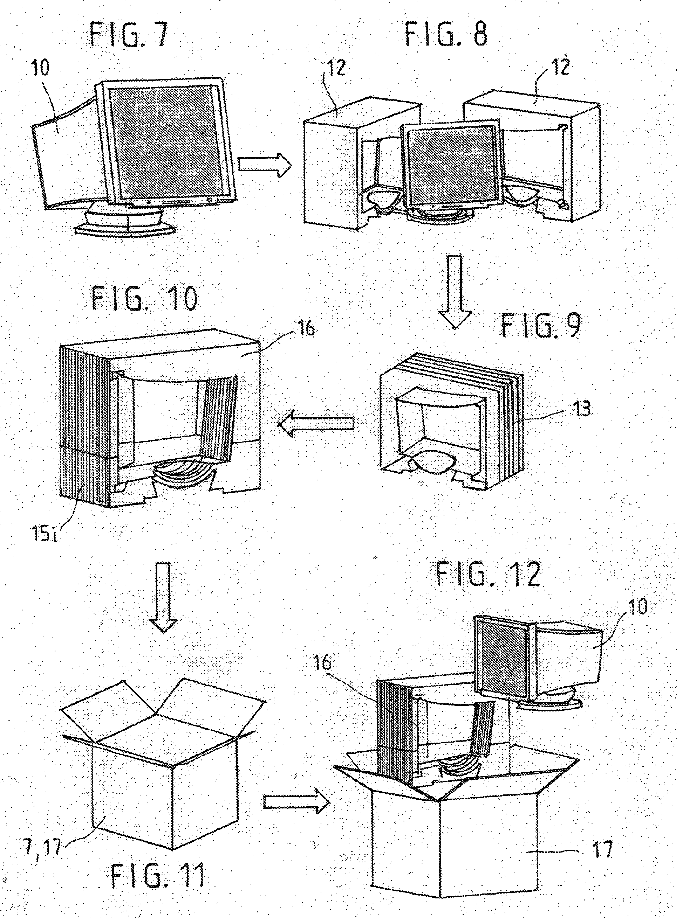

Les figures 7 à 11 représentent à titre de deuxième exemple les étapes successives du procédé selon l'invention appliquée à l'emballage-conditionnement d'un autre produit type, par exemple un écran d'ordinateur.

On définit virtuellement (figure 7) la pièce à emballer (10) ainsi que sa contre forme virtuelle (12) (figure 8) à laquelle on applique une stratification virtuelle (13) visualisée sur écran d'ordinateur (figure 9). Les couches de cartons (15ᵢ) sont alors découpées et empilées pour former un emballage (16) comportant une cavité dans laquelle on loge et on cale le produit. La forme externe des couches étant rectangulaire, l'emballage final est parallélépipédique et se loge dans un conditionnement (17) dont la conception a été prévue en même temps que celle de la contre forme et de la stratification ou dont le choix peut être effectué parmi des modèles standards existants mémorisés.

Le procédé de stratification approprié pour intégrer les étapes de conception et découpe de l'emballage et éventuellement du conditionnement est le procédé dit de STRATOCONCEPTION ® de la demanderesse objet de plusieurs brevets dont notamment le brevet EP0585502 et ses perfectionnements ultérieurs dont les contenus sont intégrés ici.

Le tableau comparatif ci-après, met en évidence les principaux avantages du procédé et du produit selon l'invention.

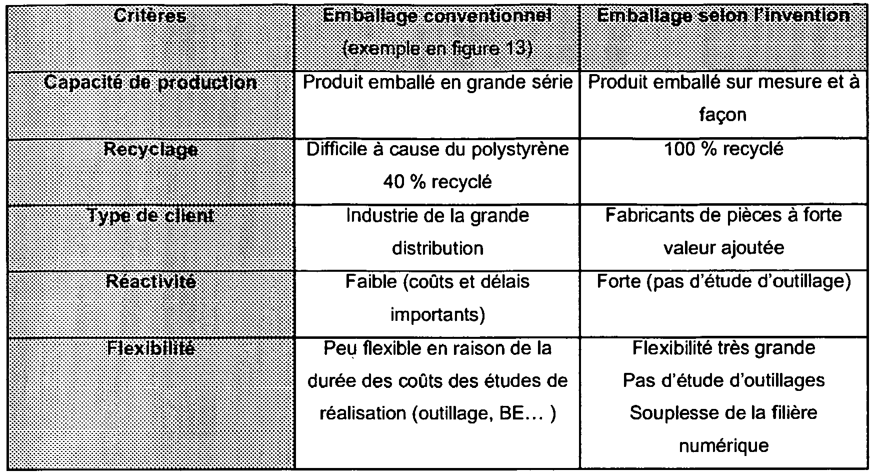

Les avantages consistent également en :
- possibilité de tenir compte des boîtes de conditionnement existantes qui seront mémorisées.
- possibilité de mémoriser un produit existant (non conçu en CAO ou pour lequel on ne possède pas la CAO)
- possibilité d'identification des couches pour faciliter le montage.
- possibilité de réaliser des couches 2D ou 3D par microfraisage rapide, découpe laser 5 axes, jet d'eau, fil chaud par exemple. Les couches 3 D ont pour avantage d'être très proches de la forme exacte du produit à emballer.
- optimisation de la matière utilisée relativement au fait que l'emballage englobe le plus exactement possible le produit.
- Réalisation directe et automatique de l'emballage du produit à partir de la seule définition numérique dudit produit.

## Revendications

1. Procédé de conception et de réalisation d'un emballage destiné à la protection et/ou transport d'un produit (1, 10), **caractérisé en ce qu'**il comprend les étapes suivantes :
- concevoir automatiquement une contre forme virtuelle (2, 12) dudit produit définie numériquement,
- découper virtuellement ladite contre forme en strates (3) selon un procédé de stratification informatique (13),
- produire toutes les données géométriques de chaque couche (5ᵢ, 15ᵢ) de matériau en plaque à découper,
- découper chaque couche de matériau en plaque qui viennent d'être définies,
- reconstituer un emballage final (6) par empilage des couches.

2. Procédé selon la revendication précédente, **caractérisé en ce qu'**il numérote les couches de l'emballage et fournit automatiquement l'ordre relatif de l'empilement des couches par rapport au placement du produit.

3. Emballage (6, 10) pour la protection et/ou le transport d'un produit (1, 10), **caractérisé en ce qu'**il est obtenu par empilage de couches de matériau dont les formes et les dimensions ont été définies selon un procédé des revendications 1 à 2, et **en ce que** ladite contre forme virtuelle définit un emballage parfaitement enveloppant, qui enveloppe, après ledit empilage de couches, la forme 3D dudit produit.

4. Emballage selon la revendication 3, **caractérisé en ce que** les couches de matériau sont des couches de matériau recyclable.

5. Emballage selon l'une des revendications 3 à 4, **caractérisé en ce que** les couches comportent des moyens de positionnement (9) avec les couches voisines.

6. Emballage selon l'une des revendications 3 à 5, **caractérisé en ce que** les couches comportent des logements pour incorporer des accessoires.

7. Emballage selon l'une des revendications 3 à 6, **caractérisé en ce que** les couches sont maintenues par le conditionnement extérieur (7, 17).

## Patentansprüche

1. Verfahren zum Entwerfen und Herstellen einer Verpackung zum Schutz und/oder Transport eines Produkts (1, 10), **dadurch gekennzeichnet, dass** es folgende Schritte umfasst :
- automatisch Entwerfen einer numerisch definierten virtuellen Gegenform (2, 12) des Produkts,
- virtuell Schneiden der Gegenform in Schichten (3) nach einem Computer-Verfahren zum Laminieren (13),
- Produzieren der sämtlichen geometrischen Daten jeder Schicht (5i, 15i) des zu schneidenden Plattenmaterials,
- Schneiden jeder soeben definierten Schicht des Plattenmaterials,
- Rekonstruieren einer endgültigen Verpackung (6) durch Aufeinanderstapeln der Schichten.

2. Verfahren nach dem vorhergehenden Anspruch, **dadurch gekennzeichnet, dass** die Schichten der Verpackung nummeriert werden und die relative Reihenfolge der Stapelung der Schichten automatisch in Bezug auf die Platzierung des Produkts geliefert wird.

3. Verpackung (6, 10) zum Schutz und/oder Transport eines Produkts (1,10), **dadurch gekennzeichnet, dass** sie durch Aufeinanderstapeln von Materialschichten erhalten wird, deren Formen und Abmessungen durch ein Verfahren nach Ansprüchen 1 bis 2 definiert worden sind, und dadurch, dass die virtuelle Form eine vollkommen umschließende Verpackung definiert, die nach dem Aufeinanderstapeln von Schichten die 3D-Form des Produkts umschließt.

4. Verpackung nach Anspruch 3, **dadurch gekennzeichnet, dass** die Materialschichten Schichten aus wiederverwertbarem Material sind.

5. Verpackung nach einem der Ansprüche 3 bis 4, **dadurch gekennzeichnet, dass** die Schichten Mittel zum Positionieren (9) mit den benachbarten Schichten umfassen.

6. Verpackung nach einem der Ansprüche 3 bis 5, **dadurch gekennzeichnet, dass** die Schichten Ausnehmungen zum Einfiigen von Zubehörteilen umfassen.

7. Verpackung nach einem der Ansprüche 3 bis 6, **dadurch gekennzeichnet, dass** die Schichten durch die äußere Verpackung (7, 17) gehalten werden.

## Claims

1. Method for designing and producing a packaging aimed at protecting and/or transporting a product (1, 10), wherein the method comprises the following steps :
- automatically designing a virtual digitally-defined counter-shape (2, 12) of said product,
- virtually cutting said counter-shape into layers (3) according to a computer-based laminating method (13),
- producing all geometric data of each layer (5i, 15i) of plate material to be cut,
- cutting each layer of the plate material that has been defined,
- reconstituting a final packaging (6) by stacking the layers.

2. Method according to the preceding claim, wherein the layers of the packaging are numbered and the relative order of stacking of the layers is automatically provided with respect to the placing of the product.

3. Packaging (6, 10) for protecting and/or transporting a product (1, 10), wherein the packaging is obtained by stacking layers of material, the shapes and dimensions of which have been defined by a method according to claims 1 to 2, and wherein said virtual counter-shape defines a perfectly covering packaging, which, after said stacking of layers, covers the 3D shape of said product.

4. Packaging according to claim 3, wherein the layers of material are layers of recyclable material.

5. Packaging according to one of claims 3 to 4, wherein the layers include means for positioning (9) with respect to the adjacent layers.

6. Packaging according to one of claims 3 to 5, wherein the layers include recesses for incorporating accessories.

7. Packaging according to one of claims 3 to 6, wherein the layers are held together by the outer packaging (7, 17).
